# EUROPEAN PATENT APPLICATION

(11) **EP 1 109 099 A1**
(43) Date of publication of application: **20.06.2001**
(21) Application number: 99403183.9
(22) Date of filing: 17.12.1999
(51) Int. Cl.: G06F 9/46

(54) **Using secured calls in object-oriented software applications**

(71) Applicant: ALCATEL, 75008 Paris (FR)
(72) Inventor: Abdelkrim, Hanine, 75009 Paris (FR)
(74) Representative: Lamoureux, Bernard

(57) **Abstract**

Object-oriented programming interface for developing applications using a secured call between a first software element and a second software element, including methods of managing secured calls, divided into three classes:
- a first class (ISCC) including methods of initiating said secured call,
- a second class (ASCC) including methods of accepting said secured call,
- a third class (SECC) including methods for bidirectional exchange of messages via said secured call or the secured closure of said call, and in which said first and second classes inherit from said third class.

## Description

The present invention concerns a method of developing object-oriented software applications using secured calls between software elements. More specifically, the invention proposes an adaptation of the GSS-API specifications to object-oriented languages.

Some definitions of object-oriented programming are outlined here. A class is a data structure grouping a set of data and the processing operations for manipulating it. The processing operations are referred to as methods. An object is referred to as an instance of a class.

A class (child) can be defined as inheriting from another class (parent). This means that it automatically has all the attributes (data and methods) of the parent class. Obviously data and/or methods belonging specifically to the child class can be defined.

The GSS-API (Generic Security Service - Application Programming Interface) specifications are described by RFC (Request For Comments) 2078 of the ITEF (Internet Engineering Task Force). They specify a set of functions for secured exchange between two software elements.

There are currently implementations of the above specifications for various languages, including object-oriented languages such as C++.

However, the aforementioned implementations do not exploit the specific characteristics of these object-oriented languages. To be more precise, they merely encapsulate the functions described in the GSS-API specifications in a class.

The use of an implementation of the above kind from an object-oriented language is inconvenient. Consequently, it increases the cost of developing applications using secured calls between software elements.

The invention also proposes to solve the problem of effective adaptation of the GSS-API specifications to object-oriented languages. The adaptation is effected independently of the target language, which can therefore be C++, Java, etc.

To this end, the invention consists firstly in a method of developing applications using a secured call between a first software element and a second software element, the software elements being object-oriented elements and using methods to manage the secured call. This method is characterized in that the methods belong to one only of the following classes:
- a first class including methods of initiating the secured call,
- a second class including methods of accepting the secured call,
- a third class including methods for bidirectional exchange of messages via the secured call or the secured closure of the call,
and in that the three classes are structured in a hierarchy in which the first and second classes inherit from the third class.

The invention also consists in a programming interface for developing applications using a secured call between a first software element and a second software element, the programming interface being an object-oriented interface and including methods adapted to manage the secured call. This programming interface is characterized in that the said methods belong to one only of the following classes:
- a first class including methods of initiating the secured call,
- a second class including methods of accepting the secured call,
- a third class (SECC) including methods for bidirectional exchange of messages via the secured call or the secured closure of the call,
and in that the three classes are structured in a hierarchy in which the first and second classes inherit from the third class.

The main advantage of the invention is that it separates into different classes functions which are of different natures and which therefore apply to different roles, each of these roles being exercised by a developed software element.

Accordingly, the developer will be interested in various classes, depending on that role. To be more precise, the developer will address:
- methods of the first class if the call is considered to be secure from the point of view of the initiator (i.e. of the software element which initiated the secured call),
- methods of the second class if the call is considered to be secure from the point of view of the acceptor (i.e. of the software element(s) that will receive the secured call), and
- methods of both classes if the call is considered to be secure from both points of view, i.e. from the point of view of the initiator and from the point of view of the acceptor. In other words, a first software element can be the acceptor of a secured call with a second software element and the initiator of another secured call with a third software element which can be the same as the second one or different.

Then, without regard to the role that it played during the setting up of the secured call, the developer will address another class to exchange messages via the secured call that has been set up.

Finally, the developer will also address the latter class to submit a request for secured closure of the secured call or to validate a request for secured closure of the secured call.

Note that the three roles are defined in the document RFC 2078 previously cited. Also, the invention has the advantage that it conforms to the standards of the IETF (Internet Engineering Task Force).

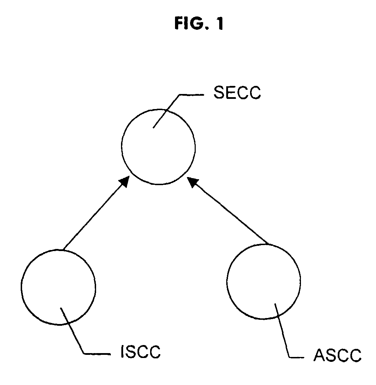

The invention and its advantages will become more clearly apparent in the following description given with reference to the single figure of the accompanying drawing, which shows the architecture of the classes in accordance with the invention.

The single figure shows three classes schematically represented as circles. Inheritance relationships between these classes are represented by arrows.

The functions specified in the GSS-API document are distributed between these classes according to their nature. To be more precise:
- The class ISCC contains methods enabling access to functions of the GSS-API specification which concern only the initiation of a secured call.
- The class ASCC contains methods enabling access to functions of the GSS-API specification which concern only the acceptance of a secured call.
- The class SECC contains methods enabling access to functions of the GSS-API specification which concern the exchange of messages via the secured call, the creation of requests for secured closure of a secured call and the validation of requests for secured closure of secured calls.

The table below shows, for each function of the GSS-API specification, the class of the architecture in accordance with the invention to which it belongs.

| GSS-API function | Corresponding class |
|---|---|
| gss_getmic | SECC |
| gss_verifymic | SECC |
| gss_wrap | SECC |
| gss_unwrap | SECC |
| gss_init_sec_context | ISCC |
| gss_delete_sec_context | SECC |
| gss_accept_sec_context | ASCC |
| gss_process_context_token | SECC |

The functions of the GSS-API specifications can correspond directly to methods with the same name and having the same parameters.

They can also correspond to methods having other names and different parameters. This is the case in particular if using the architecture of the classes is to be facilitated.

## Claims

1. Programming interface for developing applications using a secured call between a first software element and a second software element, said programming interface being an object-oriented interface and including methods adapted to manage said secured call, characterized in that said methods belong to one only of the following classes:
• a first class (ISCC) including methods of initiating said secured call,
• a second class (ASCC) including methods of accepting said secured call,
• a third class (SECC) including methods for bidirectional exchange of messages via said secured call or the secured closure of said call,
and in that said three classes are structured in a hierarchy in which said first and second classes inherit from said third class.

2. Programming interface according to the preceding claim characterized in that said methods conform to the GSS-API specifications of the IETF.

3. Method of developing applications using a secured call between a first software element and a second software element, said software elements being object-oriented elements and using methods to manage said secured call, characterized in that said methods belong to one only of the following classes:
• a first class (ISCC) including methods of initiating said secured call,
• a second class (ASCC) including methods of accepting said secured call,
• a third class (SECC) including methods for bidirectional exchange of messages via said secured call or the secured closure of said call,
and in that said three classes are structured in a hierarchy in which said first and second classes inherit from said third class.

4. Method according to the preceding claim characterized in that said methods conform to the GSS-API specifications of the IETF.
